# EUROPEAN PATENT APPLICATION

(11) **EP 1 246 416 A2**
(43) Date of publication of application: **02.10.2002**
(21) Application number: 02250916.0
(22) Date of filing: 11.02.2002
(51) Int. Cl.: H04L 12/58

(54) **Electronic messaging gateway system**

(30) Priority: 23.03.2001 SG 200101842
(71) Applicant: Hewlett-Packard Company, Palo Alto, CA 94304 (US)
(72) Inventor: Muralidhar, Vusirikala, Bangalore Karntaka 560075 (IN); Sreejith, Puthenparambil Sreedharan, Bangalore Karnakata 560075 (IN)
(74) Representative: Jehan, Robert

(57) **Abstract**

An electronic messaging system comprises a message receiving unit (104-108) for receiving an electronic message, the electronic message being encoded in a first mailing format, wherein the electronic message includes at least a receiving address information containing the address of a receiving computer or computers to which the electronic message should be sent and scheduling information. Furthermore, a message decoding unit is provided for decoding an electronic message received by the message receiving unit, thereby generating a decoded message. A message analyzing unit for analyzing the decoded message is adapted to determine the receiving computer or computers to which the electronic message should be and to determine the scheduling information. A message encoding unit is used for encoding the decoded message into a second mailing format and a message sending unit is used for sending the encoded electronic message in the second mailing format. The message sending unit is adapted to send the encoded electronic message in the second mailing format to the receiving computer or computers to which the electronic message should be sent and to send the encoded electronic message in the second mailing format according to the determined scheduling information.

## Description

The present invention relates to an electronic messaging system.

The exchange of electronic messages becomes more and more crucially important for economic life. For example, any kind of communication may take place using electronic messages between computers or any communication device comprising a processing unit, which will further be denoted as a computer as well.

The computers are usually connected to each other via a communication network, usually the Intemet/Intranet, that is a communication network using the communication protocols Transfer Control Protocol (TCP) and Internet Protocol (II)).

For encoding an electronic message, usually the Simple Mail Transfer Protocol (SMTP) is used, as it is described for example in RFC 821 (Request for Comments 821) of the IETF (Internet Engineering Task Force).

Thus, usually an electronic message is transmitted from a sending computer to a receiving computer in the following way. The sending computer encodes the message according to the SMTP and transmits the encoded electronic message to the receiving computer using TCP/IP. After having received the encoded electronic message, the receiving computer decodes the encoded electronic message and presents the decoded electronic message to the receiving computer's user.

However, problems arise if the sending computer and the receiving computer use different mailing formats, for example if the sending computer uses a mailing format according to SMTP and the receiving computer uses a proprietary mailing format different from SMTP.

The present invention seeks to provide an improved electronic messaging system.

According to an aspect of the present invention, there is provided an electronic messaging system as specified in claim 1.

The preferred embodiment can provide an electronic messaging system with enhanced efficiency even for the use with different mailing formats, that is in a heterogeneous communication network.

The preferred electronic messaging system comprises a message receiving unit for receiving an electronic message, the electronic message being encoded in a first mailing format, wherein the electronic message includes at least receiving address information containing the address of the receiving computer or the receiving computers, the electronic message should be sent to, and scheduling information. Furthermore, a message decoding unit being connected to the message receiving unit is provided for decoding an electronic message received by the message receiving unit, thereby generating a decoded message. A message analyzing unit is connected to the message decoding unit for analyzing the decoded message. The message analyzing unit is adapted to determine the receiving computer or the receiving computers the electronic message should be sent to, and the scheduling information. Furthermore, a message encoding unit for encoding the decoded message into a second mailing format is provided, the message encoding unit being connected to the message analyzing unit. A message sending unit for sending the encoded electronic message in the second mailing format is connected to the message encoding unit, wherein the message sending unit is adapted to send the encoded electronic message in the second mailing format to the receiving computer or the receiving computers the electronic message should be sent to, and to send the encoded electronic message in the second mailing format according to the determined scheduling information.

With this system, it is now possible to communicate between two computers, the sending computer and the receiving computer, wherein the sending computer uses a first mailing format, for example the SMTP, and the receiving computer uses a second mailing format, for example a proprietary mailing format. Furthermore, it is now possible to broadcast the electronic messages sent by the sending computer in the second mailing format according to a predetermined or predefined scheduling information saying, for example, when to start broadcasting the mail, that is the electronic message, and when to end with the broadcasting activity.

Thus, the preferred embodiment described is in particular applicable in a scenario, wherein the sending computers are usual personal computers or workstations, for example of a financial institution (financial institution's computer), a help desk (help desk computer), or an advertising agency (advertising agency's computer), and the second computers are simple terminal computers, for example of a merchant.

Embodiments of the present invention are described below, by way of example only, with reference to the accompanying drawings, in which:
Figure 1 shows a block diagram showing the architecture of a communication system according to a preferred embodiment of the invention.;
Figure 2 shows the components of a part of an embodiment of electronic message management system and their interactions; and
Figure 3 shows the interaction between terminal mail composer, SMTP mail server and the message manager server according to a preferred embodiment of the invention.

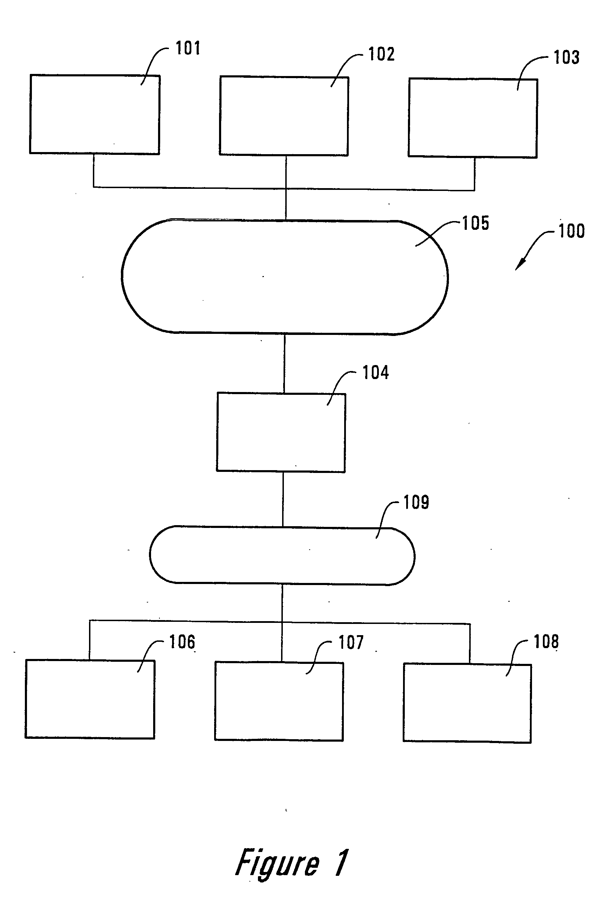

**Figure 1** shows a block diagram showing the architecture of a communication system 100 according to a preferred embodiment of the invention.

The communication system 100 comprises a plurality of first computers 101, 102, 103, further denoted as sending computers 101, 102, 103, namely a computer or a plurality of computers belonging to a financial institution, e.g. a bank, further denoted as financial institution's computer 101, a computer or a plurality of computers belonging to an advertising agency, further denoted as advertising agency's computer 102, and a computer or a plurality of computers belonging to a help desk, further denoted as help desk's computer 103.

According to this embodiment, the financial institution's computer 101 can conduct electronic polls; keep the merchant informed about new loyalty schemes, etc. using a merchant computer 106, 107, 108, which will be further described in detail.

A merchant computer in this context is a terminal computer used by a merchant, for example a terminal for being used in connection with a credit card company or bank, etc.

Furthermore, the advertising agency's computer 102 uses a further described electronic message management system 104 to put advertisements on the transaction terminal computer, i.e. the merchant computer 106, 107, 108, e.g. print advertisement on receipt footer, display advertisement on the terminal screens, etc.

Terminal deployment agency's computer, which may also be provided as sending computers, use the further described message management module to automate supply reordering, send out information about software upgrades, etc.

The help desk's computer 103 uses the further described electronic message management system 104 to automatically supply reordering, provide software upgrade information to one or a plurality of merchant computers 106, 107, 108, etc.

The sending computers 101, 102, 103 are connected to the message management system 104 via the Internet 105 as a communication network. The message management system 104 is implemented in a message management computer.

In other words, the electronic message management system 104 is aimed at making the communication between the merchant computers 106, 107, 108 and the sending computers 101, 102, 103 easier through the use of a so-called Point of Sale terminal computer 106, 107, 108 (POS terminal computer).

The message management system 104 is further connected to the plurality of merchant computers 106, 107, 108 via a local area network 109 (LAN).

The invention thus revolves around the user instance (financial institution's computer 101, help desk computer 102, advertising agency's computer 103) interacting with the merchant computers 106, 107, 108 directly using e-mail (electronic mail, electronic message) as transmission medium. In this context, it should be mentioned that the communication is a two-way communication, in other words, a bi-directional communication. Only to clarify the most important communication direction from the first computers 101, 102, 103, to the second computers 106, 107, 108, i.e. the merchant computers, the first computers 101, 102, 103 are denoted as sending computers and the second computers 106, 107, 108 are denoted as receiving computers.

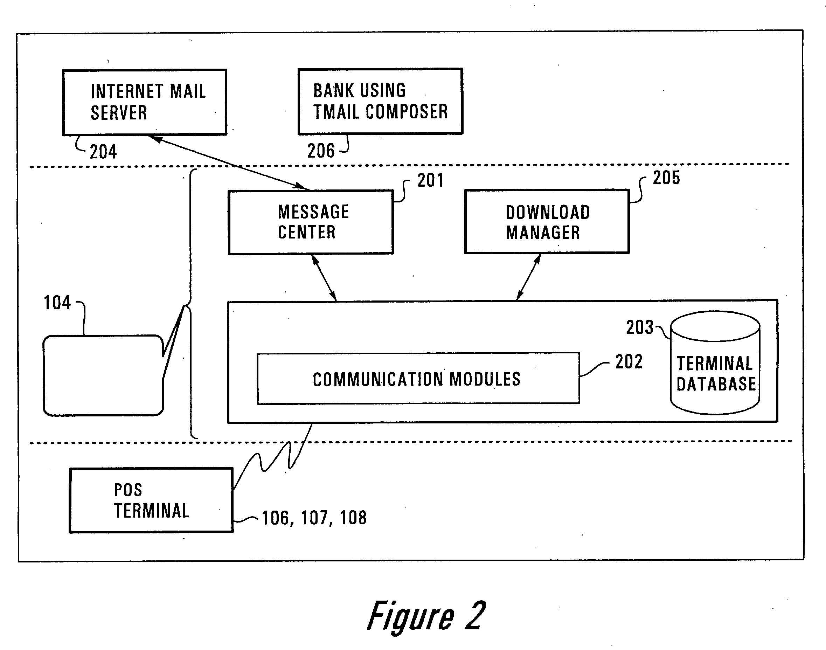

This embodiment outlines the message management system 104 comprising a message manager module 201, as shown in **Figure 2**. The message manager 201 can be used to send / receive an electronic message to /from a merchant computer 106, 107, 108 using a communication module 202, which is connected to the message manager module 201.

Each merchant computer 106, 107, 108 comprises an offline mail viewer software running on the merchant computer 106, 107, 108 for processing terminal mail messages, in other words, for processing an electronic message in a second, preferably proprietary, mailing format.

Furthermore, each merchant computer 106, 107, 108 comprises a terminal management software agent process running on the merchant computer 106, 107, 108, which terminal management software agent process will take care of mail delivery between the merchant computer 106, 107, 108 and the message management computer.

Further, a message manager server process, which will be described later in detail, is provided which is running in the message management computer and which will be responsible for the storage of an electronic message and for the forwarding of the electronic message.

A provided mail composer software is used to compose terminal mails as will be described later in detail.

The message management computer further includes a terminal database 203, from which the message manager 201 can load data from.

The message management computer runs on Windows NT™ Version 4.0 and above, and Windows 2000™ (server and professional) operating systems from Microsoft Corporation. The message manager server process will use the ODBC (Open Database Connectivity) as well as database abstraction modules to target database independence. According to a preferred embodiment of the invention, Informix and Oracle databases are used.

The message manager server process is scalable, i.e. it may run on multiple servers and allow multiple instances of the server process.

The message manager 201 interacts with an SMTP mail server as an internet mail server 204 and also with a download manager module 205 and a unit for sending/receiving mails to / from the merchant computers 106, 107, 108 in the second mailing format. The message manager 201 also allows the bank computers to retrieve the terminal's statistical report via e-mail.

The message manager 201 implements the SMTP protocol for exchanging mails between the merchant computers 106, 107, 108 and the Internet mail server 204 and thus with the sending computers 101, 102, 103. The types of terminal mails, i.e. the electronic message in the second mailing format, that are processed are listed below:

The types of messages that can be sent to the merchant computers 106, 107, 108 are the following.
- Text Message, i.e. an email message to and from the merchant computers 106, 107, 108, i.e. the POS terminal computers;
- Display Image, i.e. basic graphics, e.g. graphic logos for being displayed on the POS terminal computers;
- Report Request, i.e. extended text, e.g. an email message intended for a printing report;
- Receipt Request, i.e. extended graphics, e.g. graphic logos intended for customer receipts;
- Help Request,. i.e. a supply ordering, e.g. a message from a POS terminal computer containing a POS-related supply order or Help Request Service from the POS terminal computer 106, 107, 108;
- Poll request of an electronic survey sent to the POS terminal computer 106, 107, 108. Response from the merchants are collected using the POS terminal computers 106, 107, 108.

When a Create Request is received by the message management computer from the message management composer module 206, the following actions are executed:

### 1. Validation of Request messages:

a) Validation for the privileged user
   The Requested user is validated whether he/she has the permission to create such type of Mail message Type (e.g., Text message, Display Image, etc.,)
b) Validation of Message Type
   The requested message type is validated against the supported Message types configured by the message management computer.
c) Validation of Broadcast date with Activation Date
   The following items are checked:
   The time and date of the start of the action must be later than the predefined Start Broadcast Date parameter, which is included in the electronic message in the SMTP mailing format sent by the sending computer 101, 102, 103.
   The time and date of the end of the action must be later than the End Broadcast date parameter, which is included in the electronic message in the SMTP mailing format sent by the sending computer 101, 102, 103.
   During each of the above validation steps a), b) and c), if the validation fails the electronic message is send to the message management composer module 206 including the information about the appropriate reason for being not able to process the respective request.

### 2. UMID Generation

Each Valid Create Mail Request is associated with a Unique Message ID (UMID) created by the message management computer, which can be used by user of the message management composer module 206 for further reference. The UMID is also used by the message management computer for processing the Request.

### 3.Storing Common Mail Attributes:

The Common Mail Message attributes (common to all the Request Message Types) are stored in the Database table with the generated UMID.

The Common Message attributes stored along with UMID as reference are as follows:
- UMID;
- FromUser;
- Broadcast Query;
- Formatted Query (with respect to the terminals information);
- Message (Formatted specific to Message Type, which is understandable by the Terminal Application);
- Subject;
- Recipient Application on Terminal computer;
- Received date (Date stamp when the message management computer received the Request);
- Start Broadcast Date;
- End Broadcast Date;
- Read Receipt Required Flag;
- Priority (like Urgent, High, Low);
- Status of the Request (Active /NotActive);
- Status Change Date;
- Group ID;

This attribute is based on the FromUser attribute and belongs to which group ID e.g., CitiBank ID being an arbitrarily predefined number 101.

### 4.Processing of Graphic Attachment:

A graphic attachment (in the .bmp format) is sent along with create request by the message management composer module 206 either to display on the merchant computer 106, 107, 108 (in case of the message type "Display Image") or to print on the receipt footer/report footer (in case of the message type "Receipt Request" or "Report Request").

Graphic data is stored in the Database along with the UMID. Furthermore, the graphic data is converted into an arbitrarily predefined graphic format depending on the message type.

This graphic data can be used by a format engine (specific to Terminal Model like OMNI-3300 by VeriFone™ etc. as merchant computer) for converting the .bmp format
to a predefined graphic format for display / printing on the merchant computer 106, 107, 108,respectively.

This Graphic data (.bmp format) can also be used by a new format engine used for supporting a new terminal model added to the graphic support feature.

Graphic data is converted to predefined graphic format for a set of supported terminal model, i.e. merchant computer, and stored in the database together with the corresponding UMID, the name of the merchant computer model name and the type of graphic format which is sent to the terminal when terminal goes on line with the message management computer.

### 5.Sending Mail to Composer User:

After each successful creation of an electronic message to the terminal/set of terminals (based on the query from the message management composer module 206), the electronic message is sent to the user of the message management composer module 206giving him the details about the electronic message like:
- the UMID;
- the Received Date (received by the message management computer);
- the Message Type;
- the Priority;
- the Addressed Recipient;
- the query ('To' field which results in set of terminal/ a terminal).

### 6.Dynamic supporting of mail management for new terminals, i.e. for new merchant computers:

When a new terminal compute r is added to the message management computer, the properties of the terminal computer are matched with the existing active message's query (which are in turn mapped to the UMID). The UMIDs for which the query of the UMID matches with that of the added terminal computer property are added as pending mails to the new terminal computer appropriately.

The electronic messaging system provides the following functionality.
- Support for the mail maintenance (update list and delete) from remote location using the SMTP interface;
- Scheduled mail sessions with the terminal computers;
- Support for getting terminal statistical counters through electronic messaging;
- Support for plugging-in mail processing modules for extending the message manager 201.

These features are dealt with in detail below.

In general, the users of the message manager 201 are:
- a merchant - he uses the message manager 201 to send and receive mails from the bank or deployment agency, for example;
- a help desk user;
- a financial institution (bank) / deployment agency to compose and send terminal mails, i.e. electronic messages in the second mailing format, using the terminal mail composer module 206;
- supply order firms for interactions with the merchant computer; and
- the message management computer's system Administrator:

The system administrator is responsible for
- installing/upgrading the terminal message manager system,
- configuring the terminal message manager users,
- message manager mail box maintenance.

### Merchant

The merchant uses the terminal mail application to view and send response to the mails sent from the message management computer. The merchant can use this to request help from the deployment agency, request reorder of consumables etc. The message manager server will automatically process the messages from the merchant. On getting an electronic message from the merchant the message manager server can be configured to send an automated mail message. For e.g. if the merchant sends a reorder paper request then the mail server can be configured to send mail (with details about the merchant's location / requirement) to paper supplier.

### Helpdesk user

The helpdesk user can use the terminal mail composer module 206 to send mails to a terminal computer or a group of terminal computers.

### Bank / deployment agency

The bank can use the terminal mail composer module 206 to compose a terminal mail in the second mailing format and send it through conventional mail servers to the message management computer. The message manager at the message management computer will store the message and broadcast it to a group of terminal computers. The bank user will select the broadcast group using the terminal mail composer module 206. The message manager server will also send back status terminal mail to the sending computer. The bank can also use the message manager server to retrieve the transaction statistics (collected by a provided message management computer's Information Collection Module) via e-mail.

### Supply Order Firms

The electronic messaging system can be configured to send automated mails to the supply order firms on receiving help request from the merchant computer. The supply order firms can also use the terminal mail functionality to conduct electronic surveys.

Future references in this document to the users who interact with the message manager server via e-mail are also referred to as **external users.**

The message manager server is adapted to the RFC 821 SMTP protocol.

The message manager will use SMTP as a gateway between the terminal computers 106, 107, 108 and the Internet 105. The SMTP protocol module will receive mails from
terminal mail composer module 206 and will store the mail in a mail database. Whenever a terminal computer dials into message management computer, the message manager server will synchronize the mails between the server and the terminal computer.

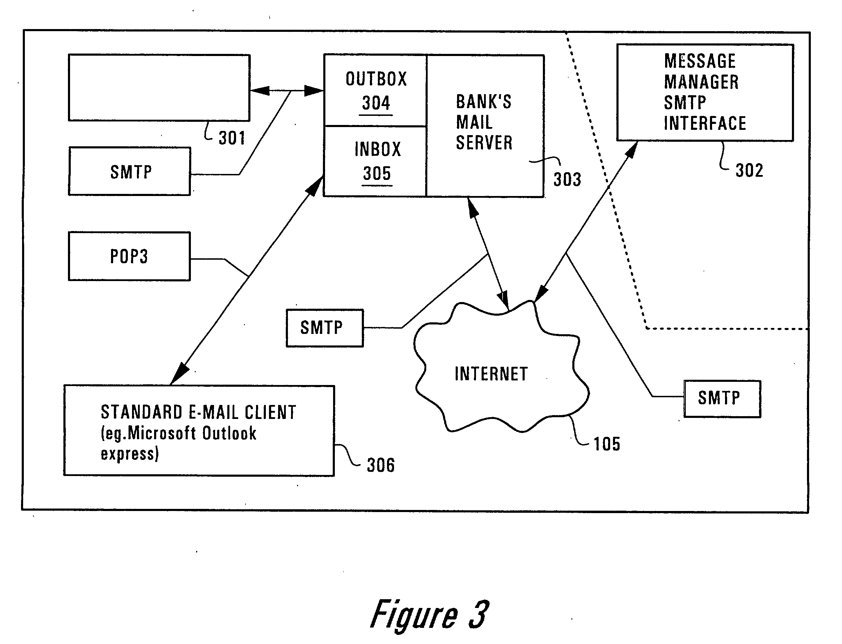

The diagram in **Figure 3** below shows how the terminal mail composer module 301 interacts with the message manager SMTP interface 302.

The terminal mail composer module 301 uses a mail account on the bank's mail server module 303 to send out the composed mail message to the message manager server of the message management computer. The mail will always be addressed to a pre-defined mail-id 304 (configured by the message manager system administrator) on the message manager server. The message manager will respond to the mails sent by the terminal mail composer module 301 and the response can be read from a further mail account 305 using standard e-mail clients 306.

**Figure 3** shows the interaction between the terminal mail composer module 301, the SMTP mail server and the message manager server of the message management computer.

### SMTP Sending

For sending an electronic message in the SMTP format, i.e. in the first mailing format, the SMTP server module of the message manager server relies on external SMTP servers for mail delivery. The SMTP server forwards all outbound mails to a configured
SMTP server. In the following, there are listed the general functionalities of the SMTP send module:
1. The external mail relay agent's address are configurable.
2. The SMTP server will store all the mails and forward it to a remote server.
3. In case the remote server is unavailable the SMTP server will continue to retry sending the mail. The retry interval is configurable.
4. The SMTP server will connect to mail relay agent on demand basis.
5. The SMTP server will not perform mail relaying.
6. The SMTP server will not implement IMAP / POP3 protocol for allowing clients to get mails from the server.
7. The mails will be stored in the database.
8. All mail activities will be logged in the database.
9. The SMTP server module should be implemented as a plug in module to switch from SMTP to IMAP/POP3 mode in future.

### SMTP mail receiving

For receiving an electronic message in the SMTP format, i.e. in the first mailing format, the SMTP receive module will accept mails forwarded to it by remote mail relay agents. In the following, there are listed the general functionalities of the SMTP receive module.
1. The SMTP receiving module is able to handle multiple simultaneous connections.
2. The SMTP receiving module will accept multiple attachments. However, according to this preferred embodiment, if multiple attachments are sent it will process only the first attachment.

In the following, the User model will be described in detail.

### Registered Users

The users who interact with the message manager server for sending mails to terminal computers, generating terminals statistics report and do mail maintenance using the composer module 206 are the external users of message management module of the message management computer. The message management module of the message management computer maintains a database of external users. The external users are authenticated against this database before they are allowed to do any further operations. Authenticated **external users** are referred to as **registered users.**

### User Groups

For ease of user database maintenance, the users are grouped into named groups. Each group will have a unique group identifier. The message management computer's system administrator creates the user groups and adds users to these user groups. The user groups can be used to manage users from a bank.

For authentication of a user, the following mechanism is used:
- The message manager will maintain a database of registered users. And this database will have the e-mail ID's of the registered users.
- Whenever the message manager server gets a mail through the SMTP interface 302 the sender's e-mail id is validated against the "registered users" database. If this validation fails an error response is sent to the sender.
- In addition to this a registered user has a set of privileges. These privileges are listed below. After the user is authenticated user is allowed to perform only the actions for which user has got privileges.

A registered user can have one or more of the privileges listed below. These privileges are checked when the external user requests the service of the message manager through e-mail. The e-mails for these services are composed using the terminal mail composer module 206.
1. Create a new terminal mail.
2. Delete a terminal mail.
3. Get a list of terminal mails.
4. Query existing terminal mails based on a predetermined filter.
5. Query statistical report through e-mail.
6. Update an existing terminal mail.

In all the above scenarios the terminal mail is identified using a machine generated unique mail ID.

For ease of user database maintenance user are grouped together and privileges can be assigned to a group.

In case of privilege check / authentication failure an error response is sent back to the sender requesting the service.

In addition to this the users can be grouped together and privileges can be assigned to a group of users. E.g. the external users who work in the same bank can be grouped together.

When deleting, listing or querying a terminal mail the user the privilege check is done for the group. E.g. a first user A can delete a terminal mail sent by a second user B if user A and B belong to the same group.

The terminals when synchronizing the mails will send the group id to the server and the server will use this group id to send mails send by users in that group.

In the following, the mail handling, in other words, the handling of an electronic message in the messaging system is described in detail:

Every terminal mail processed by the message manager server has the following attributes.
- A unique mail ID:
   This mail ID is generated by the system and will be used by the local and external users to refer to mail while performing operations on the terminal mails.
- A broadcast address:
   The mail can be addressed to one terminal computer or to a group of terminal computers. The external customer, using the terminal mail composer module defines the broadcast address. The broadcast address is based on a filter that can be a combination of one or more of the following.
      1. Model name,
      2. Application name,
      3. Terminal ID,
      4. Merchant ID,
      5. Merchant name,
      6. Address,
      7. City,
      8. State,
      9. Postal code,
      10. Region,
      11. Market segment (e.g. smart card loyalty etc).
- Start Broadcast date:
   The date on which the message manager server will start delivering the mails.
- End broadcast date:
   After this date the server will not deliver this mail and the mail will be deleted from the server.
- Read receipt:
   This mail attribute can be set to true for getting read acknowledgements from the terminal computer. If a mail is marked for read receipt, the terminal computer will send a read receipt mail to the server. The server will relay the read receipt back to the sending computer.
- Application:
   The Target Application on the Terminal to which this mail message has to be sent like e.g., VISACASH
- Priority:
   The mails can have three priorities.
      1. Low:
         If a mail is sent with low priority it will be stored in the terminal database and will be transferred to the terminal computer when the terminal computer goes online. Low priority mails on the terminal computer will be replaced by a message with high priority when the storage limit on the terminal exceeds the maximum mail capacity on the terminal computer.
      2. High:
         If a mail is sent with high priority it will stored in the terminal database and will be transferred to the terminal computer at the scheduled times (usually after the merchant's business hours).
      3. Urgent:
         If the mail is sent with urgent priority the mail will be stored in the database and the server begins to broadcast it to the terminal computers immediately. The system administrator can configure an upper limit for the number of terminal computers that are addressed in a high priority mail. If the number of terminals addressed by a high priority mail is more the configured one, an error response is sent back to the external user.
- Text data:
   This data is transferred to the terminal computer without any format changes.
- Graphic data:
   The external user can attach a bitmap image to the mail message. The mail server will convert this bitmap image to a terminal display or printer format. The format conversion will be based on the terminal model. The system administrator can set a width and height of the terminal image on a per model basis. If the attachment size is more than this configured value, the original bitmap image will be diminished to the configured image size. The message manager will also make sure that the graphic attachment is provided only for a voucher, display image and report footer. In the preferred embodiment, for Display Image the Maximum Width of the BMP is 128 pixels and the Maximum Height of the BMP is 64 pixels; for Printable Image the Maximum Width of the BMP is 300 pixels and Maximum Height of the BMP is 80 pixels.

The external user with the help of terminal mail composer sets these mail attributes except for the UMID, which is generated by the messaging system itself automatically.

As soon as a mail arrives at the message manager server, the following actions are performed.
1. The sending computer, which is the sender of the mail will be authenticated against the external users registered users database. If the authentication fails the message is ignored and an error response is sent back to the sending computer.
2. A unique mail ID generated by the server will be assigned to the mail and a response is sent back to the external user with the UMID and a copy of the original message.
3. If the mail includes a request for performing mail maintenance operation (delete, list e-mail, query statistics etc) then the action defined in the mail will be performed and a response is sent back to the sending computer.
4. If the mail is addressed to a group of terminal computers the mail will be stored in a pending mail database. The message manager server will start sending out the mail at the start broadcast date specified in the mail, wherein the mail is encoded in the second mailing format using an encoding unit (not shown). The exception to this is when a mail is sent with high priority.
5. If the mail message has a graphic attachment it will be converted into a format suitable for displaying and storing on the terminal.

In all the above scenarios the mail will be stored in the mail database till it is explicitly deleted by the system administrator or is purged by the messaging system.

The message Manager server uses the algorithm described below for transporting mails to/ from a POS terminal, i.e. a merchant computer.

The composer module generated mail will have the start broadcast date and end broadcast date.

The message management computer will send mails to the terminal during the broadcast period defined by the start broadcast and end broadcast date.

In case of urgent mail messages the message management computer will dial out to the list of terminals for transferring mails.

The message manager server collects the mails from the terminal computers whenever the terminal computer is connected to the message management computer. This could happen when
■ A terminal computer dials into the messaging system.
■ The message management computer dials out to the messaging system for scheduled data collection.
■ An urgent mail comes into the message management computer which triggers host dialing out to the terminal computers.

The terminal computer may send three types of messages.
■ Request Item (Help) request;
■ Poll response;
■ Read Acknowledgement for the following message types
   1. Display Image;
   2. Text message;
   3. Report footer message;
   4. Receipt footer message;
   5. Request Item Request ( Help Request).

The help request message will be identified by UMID. This ID will be used to lookup a list of configured e-mail IDs (contact address of support organizations, configured by the system administrator as well as the maximum limit if the request is associated with a supply reorder) and this list of e-mail IDs are hence forth referred to as help URLS.

The following are the actions performed on receiving a help request message sent by the terminal computer.
1. The quantity requested by the merchant computer for the supply reorder will be checked against the maximum allowed (configured using the composer module) and if it exceeds the configured value it is ceiled to the configured maximum limit.
2. The help request will be forwarded to help URLS. This e-mail will have information about
   ■ The type of request (E.g. Need paper rolls, Need help in batch settlement.)
   ■ The UMID associated with the help request mail.
   ■ The supply order quantity.
   ■ The shipping address (site address).
3. The mail activity is logged.
The poll response messages are passed on to the originator of the poll request.
The automated mail that is sent out will have the following information:
i. The poll response
ii. The UMID, the poll request received date and time.
iii. The terminal computer/merchant details.

A read response will be processed in the same way as the poll response message. The read acknowledgement e-mail will have:
i. The UMID, the mail request received date/time.
ii. The terminal computer/merchant details.

The disclosures in Singapore patent application no. 200103546-8, from which this application claims priority, and in the abstract accompanying this application are incorporated herein by reference.

## Claims

1. An electronic messaging system including:
a message receiving unit for receiving an electronic message, the electronic message being encoded in a first mailing format, wherein the electronic message includes at least the following information:
- receiving address information containing the address of the receiving unit or units to which the electronic message should be sent,
- scheduling information,
a message decoding unit for decoding an electronic message received by the message receiving unit, thereby to generate a decoded message,
a message analyzing unit for analyzing the decoded message, wherein the message analyzing unit is operable to:
- determine the receiving unit or units to which the electronic message should be sent,
- determine the scheduling information,
a message encoding unit for encoding the decoded message into a second mailing format,
a message sending unit for sending the encoded electronic message in the second mailing format, wherein the message sending unit is operable to:
- send the encoded electronic message in the second mailing format to the receiving unit or units to which the electronic message should be sent, and
- send the encoded electronic message in the second mailing format according to the determined scheduling information.

2. An electronic messaging system according to claim 1, wherein the first mailing format is a format according to the simple mail transfer protocol.

3. An electronic messaging system according to claim 1 or 2, including at least one receiving computer connected to the message sending unit.

4. An electronic messaging system according to claim 3, wherein the receiving computer is a terminal computer.

5. An electronic messaging system according to claim 4, wherein the receiving computer is a merchant computer.

6. An electronic messaging system according to any preceding claim, including at least one sending computer connected to the message receiving unit.

7. An electronic messaging system according to claim 6, wherein the sending computer is connected to the message receiving unit via a communication network.

8. An electronic messaging system according to claim 7, wherein the sending computer is connected to the message receiving unit via the Internet/Intranet.

9. An electronic messaging system according to any preceding claim, wherein the sending unit is a computer one of the following types:
a financial institution's computer,
a help desk computer, and/or
an advertising agency's computer.

10. An electronic messaging system according to any preceding claim, wherein:
the message receiving unit is operable to receive an electronic message encoded in the second first mailing format and to receive address information containing the address of the sending computer, the electronic message being in the second mailing format of the receiving unit to which it is to be sent,
the message decoding unit is operable to decode the electronic message in the second mailing format, thereby to generate a decoded message,
the message encoding unit is operable to encode the decoded message into the first mailing format, and
the message sending unit is operable to send the encoded electronic message in the first mailing format.
